# EUROPÄISCHE PATENTSCHRIFT

(11) **EP 2 552 636 B1**
(45) Veröffentlichungstag und Bekanntmachung des Hinweises auf die Patenterteilung: **08.07.2020**
(21) Anmeldenummer: 11713723.2
(22) Anmeldetag: 25.03.2011
(51) Int. Cl.: B23K 20/12

(54) **VERFAHREN ZUR HERSTELLUNG EINER REIBSCHWEIßVERBINDUNG ZUR VERBINDUNG VON MINDESTENS ZWEI PLATTENARTIGEN BAUTEILEN**
METHOD OF FRICTION WELDING FOR CONNECTING AT LEAST TWO PLATE-LIKE COMPONENTS
MÉTHODE DE LIAISON PAR SOUDAGE PAR FRICTION POUR LA LIAISON D'AU MOINS DEUX PLAQUES

(30) Priorität: 29.03.2010 DE 102010013229
(43) Veröffentlichungstag der Anmeldung: 06.02.2013
(73) Patentinhaber: EJOT GmbH & Co. KG, 57334 Bad Laasphe (DE)
(72) Erfinder: CHRIST, Eberhard, 99897 Tambach-Dietharz (DE)
(74) Vertreter: Puschmann Borchert Bardehle Patentanwälte Partnerschaft mbB
(86) Internationale Anmeldenummer: PCT/EP2011/054620
(87) Internationale Veröffentlichungsnummer: WO 2011/124482

(56) Entgegenhaltungen:
- EP-A1- 1 813 376
- CA-A- 1 177 124
- DE-A1-102006 013 529
- DE-A1-102009 006 775
- DE-U1-202005 017 524
- GB-A- 668 395
- JP-A- S61 122 490
- JP-A- 2004 017 084
- US-A- 3 114 031

## Beschreibung

Die Erfindung bezieht sich auf ein Verfahren zur Herstellung einer Reibschweißverbindung zur Verbindung von mindestens zwei plattenartigen Bauteilen unter Verwendung eines Verbindungselements mit einem Zentrierteil zum zentrierten Führen des unter Rotation und Druck stehenden Verbindungselementes während eines Durchdringens des bzw. der oberen Bauteile durch einen Dorn, der hinsichtlich seiner Länge an die Stärke des bzw. der oberen Bauteile angepasst ist, wobei das wenigstens eine obere plattenartige Bauteil durch einen Bund am Verbindungselement an das untere Bauteil angedrückt wird.

Für die feste Verbindung von zwei plattenartigen Bauteilen ist der Vorgang des Reibschweißes bereits eingesetzt worden, wie sich zum Beispiel aus der US-PS 3,477,115 ergibt. In dieser Druckschrift wird ein Verbindungselement auf zwei aufeinander liegende Metallplatten aufgesetzt und unter Rotation durch das obere Bauteil hindurch gedrückt, wobei sich aufgrund von Reibungswärme im Bereich eines Dornes als Bestandteil des Verbindungselementes eine solche Erhitzung des oberen Bauteils ergibt, dass dieses im Bereich des Dornes zum Schmelzen gebracht wird, so dass der Dorn bis in den Bereich des unteren Bauteil vordringen kann und hier nach Anhalten der Rotation des Verbindungselementes in erstarrtem Material des oberen und unteren Bauteiles verbleibt, wobei ein an dem Verbindungselement angebrachter Bund durch Aufsetzen auf das obere Bauteil dafür sorgt, dass die beiden Bauteile fest miteinander verbunden bleiben.

Es ist weiterhin durch die DE 10 2009 006 775 A1 ein Verbindungselement zur Verbindung zweier aneinander anliegenden Werkstücke veröffentlicht worden, bei denen es sich gemäß dem Ausführungsbeispiel um zwei Blechbauteile handelt. Das Verbindungs- bzw. Fügeelement weist als charakteristisches Merkmal einen balligen Vorsprung auf, der nach Art eines abgerundeten Dorns gestaltet ist, wodurch das Fügen zweier Werkstücke verbessert werden soll. Besondere Gründe hierfür sind in der Druckschrift nicht angegeben.

Bei diesen Gestaltungen der Erstellung einer Verbindung zwischen zwei plattenartigen Bauteilen hat sich bereits ergeben, dass man den Verbindungselementen im Bereich ihres Dornes eine spitzkonische Gestaltung geben kann, durch die der relativ spitz verlaufende Abschnitt eine Zentrierfunktion ausübt (siehe DE 10 2006 013 529 A1). Dabei handelt es sich um eine relativ komplexe Gestaltung, für die ein aufwendiges Herstellungsverfahren erforderlich ist, so dass diese Gestaltung für eine kostengünstige, presstechnische Massenfertigung ungeeignet ist und offensichtlich sich bisher diesbezüglich auch nicht durchgesetzt hat.

Der Erfindung liegt die Aufgabe zugrunde, ein Verfahren zur Verbindung von Bauteilen anzugegben, bei dem ein Verbindungselement verwendet werden kann, das mit geringem Fabrikationsaufwand hergestellt werden kann und für die Verbindung von mindestens zwei plattenartigen Bauteilen besonders gut geeignet ist, so dass mit ihm in einem stetigen Folgeprozess eine Reibschweißverbindung von mindestens zwei Plattenbauteilen in kontinuierlichem Betrieb herbeigeführt werden kann, wobei das Verbindungselement aufgrund seiner Gestaltung einerseits seine genaue Führung zu der Reibschweißverbindung gewährleistet und andererseits die sichere Verbindung der beiden Platten sicherstellt.

Das erfindungsgemäße t ist dadurch gekennzeichnet, dass ein Verbindungselement eingesetzt wird, bei dem das Zentrierteil als Stift aus einer in die Reibschweißverbindung eingehenden, im wesentlichen ebenen Querschnittsfläche des Dorns ragt und in Bezug auf die Länge des Dornes so kurz und dünn ausgebildet ist, dass es nach Durchdringen des bzw. der oberen Bauteile praktisch vollständig unter Erweichen seines Materials in die Reibschweißverbindung eingeht.

Das Verbindungselement mit einem für die Reibschweißverbindung zuständigen Dorn und einem als Stift ausgebildeten Zentrierteil lässt sich wegen dessen kurzer dünner Gestaltung in besonders günstiger Weise herstellen. Das als Stift ausgebildete Zentrierteil sorgt dabei von Anfang an dafür, dass es die Elemente sicher führen und somit seine Aufgabe konzentriert auf die vorgesehene Verbindungsstelle ausüben kann. Durch das kurze und dünne Zentrierteil lässt sich der Dorn von einem Abwandern von der betreffenden Einsatzstelle sicher abhalten, so dass jeder Verbindungsvorgang konzentriert durch das als Stift ausgebildete Zentrierteil durchgeführt werden kann und die aufgebrachte Reibenergie ausschließlich auf die betreffende Stelle des eindringenden Verbindungselementes konzentriert wird.

Das Zentrierteil kann man als zylindrischen Stift gestalten, es ist aber auch möglich, den Stift konisch auszubilden. Darüber hinaus kann man dem Stift eine zentrale Vertiefung geben, so dass dieser ähnlich einem hohlen Zylinder ausgebildet ist, was das Volumen des Stiftes verringert und auch die Führungsfunktion des Stiftes und seiner Herstellbarkeit verbessert.

In den Figuren sind Ausführungsbeispiele der Erfindung dargestellt. Es zeigen:
- Figur 1: das Verbindungselement allein mit einem aus dem Dorn des Verbindungselementes herausragenden kurzen zylindrischen Stift,
- Figur 2: das Verbindungselement gemäß Figur 1, aufgesetzt auf das obere von zwei plattenförmigen Bauteilen,
- Figur 3: das Verbindungselement nach Durchdringen des oberen Bauteiles mit weitgehend deformiertem Stift,
- Figur 4: die fertige Reibschweißverbindung mit dem Verbindungselement und zwei plattenförmigen Bauteilen,
- Figur 5: das Verbindungselement mit einem das Zentrierteil bildenden konisch ausgebildeten Stift,
- Figur 6: das Verbindungselement mit flach konischer Querschnittsfläche des Domes,
- Figur 7: das Verbindungselement mit einem Stift mit zentraler Vertiefung.

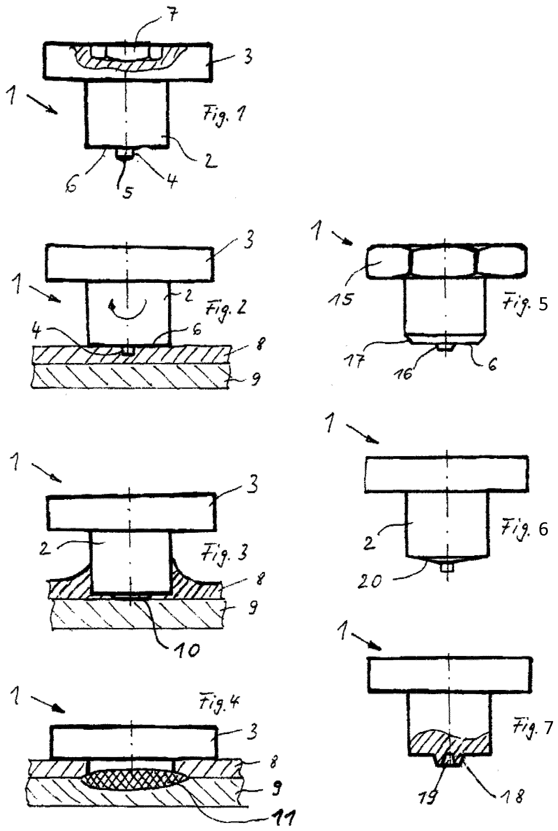

In der Figur 1 ist das Verbindungselement 1 dargestellt, das aus dem Dorn 2 und dem an diesem angesetzten Bund 3 besteht. Auf der dem Bund 3 abgewandten Seite des Dorns 2 ragt aus diesem der das Zentrierteil bildende Stift 4 heraus, der gegenüber dem Dorn 2 besonders kurz und dünn ausgebildet ist, dabei aber im wesentlichen eine zylindrische Gestalt besitzt. Der Stift 4 besitzt aus fabrikatorischen Gründen eine leicht abgerundete Stirnfläche 5 und ragt als Zylinder aus der ebenen Querschnittsfläche 6 des Dornes 2 heraus. Der Bund 3 weist noch eine Werkzeugaufnahme 7 auf, die hier als Innensechskant ausgebildet ist und von einem entsprechenden Sechskantschlüssel ausgefüllt werden kann, über den dann das Verbindungselement 1 für den Verbindungsvorgang in Drehung gesetzt werden kann.

Gemäß einem Ausführungsbeispiel des Verbindungselementes 1 besitzt dessen Dorn 2 eine Länge von 5 bis 6 mm und einen Durchmesser von etwa 4-5 mm. Der Stift 4 ist 0,5-1 mm lang mit einem Durchmesser von 1-2 mm. Je nach Größe des Verbindungselementes können für seine Bestandteile natürlich auch andere Größen gewählt werden.

Das Verbindungselement 1 gemäß Figur 1 ist in der Figur 2 zusammen mit zwei plattenförmigen Bauteilen dargestellt, und zwar in einer 1. Lage, in der das Verbindungselement 1 mit seiner Querschnittsfläche 6 auf das obere Bauteil 8 aufgesetzt hat, wobei der Stift 4 gerade in das Material des Bauteils 8 eingedrungen ist und diesbezüglich seine Zentrierfunktion ausüben kann. In der in der Figur 2 dargestellten 1. Lage befindet sich das Verbindungselement 1 in Drehung, wonach in bekannter Weise ein Reibschweißvorgang eingeleitet wird. Das Verbindungselement 1 drückt dabei mit seiner Querschnittsfläche 6 auf das obere Bauteil 8 und bewirkt aufgrund von erzeugter Reibungshitze ein Aufweichen des Bauteils 8, so dass das Verbindungselement 1 das Bauteil 8 durchdringen kann und mit seinem Stift 4 schließlich auf die Oberfläche des Bauteils 9 auftrifft, wobei während dieses Durchdringungsvorgangs bei zentrierender Führung des Dornes 2 durch den Stift 4 das Material des Stiftes 4 aufgeweicht wird und schließlich vollständig deformiert wird.

Mit dem Auftreffen des Stiftes 4 auf die Oberfläche des Bauteils 9 in einer 2. Lage wird der Stift 4 deformiert und nimmt dann die verbreitete Gestalt 10 ein, wie sie in der Figur 3 dargestellt ist. Mit Fortschreiten der Axialbewegung fließt der Stift schließlich vollständig in die Breite, sodass die Querschnittsfläche 6 mit der Platte 9 in Berührung kommen kann und eine Reibschweißverbindung bildet. Aufgrund des geringen Durchmessers, der kleinen Länge und damit des geringen Volumens des Stiftes wird der Reibschweißprozess durch den Stift nicht behindert.

Der beendete Reibschweißvorgang zwischen Verbindungselement 1 und dem unteren Bauteil 9 ist dann in der Figur 4 dargestellt, wo der eng schraffierte Bereich 11 eine Reibschweißzone darstellt, über die das Verbindungselement 1 fest mit dem unteren Bauteil 9 verbunden ist, wobei der Bund 3 des Verbindungselements 1 das obere Bauteil 8 fest an das untere Bauteil 9 drückt.

In der Figur 5 ist eine weitere Abwandlung des Verbindungselements 1 dargestellt, bei dem der Bund 15 als Außensechskant dargestellt ist, der damit von einem entsprechenden Sechskantschlüssel aufgenommen werden kann. Der Stift 16 ist hier schwach konisch ausgebildet. Am Rand der Querschnittsfläche 6 ist hier die Abschrägung 17 dargestellt, durch die das Fließen des verdrängten Materials aus der Platte 8 verbessert wird.

Figur 6 zeigt eine Abwandlung des Verbindungselementes 1, die darin besteht, dass die Querschnittsfläche 20 des Dornes 2 flach konisch gestaltet ist.

In der Figur 7 ist eine Abwandlung des Verbindungselements 1 dargestellt, bei dem der teilweise im Schnitt dargestellte Stift 18 eine innere Vertiefung 19 aufweist. Der dabei entstehende relativ schmale Rand des Stiftes 18 kann dabei eine stärkere Führung durch den Stift 18 bewirken und das Eindrehen in ein anderes Bauteil erleichtern. Bei dieser Ausführung kann der Durchmesser des Stiftes auch größer sein als 2 mm.

## Patentansprüche

1. Verfahren zur Herstellung einer Reibschweißverbindung zur Verbindung von mindestens zwei plattenartigen Bauteilen (8,9), bei dem ein Verbindungselement (1) verwendet wird, das einen Bund (3) und einen Dorn (2) aufweist, wobei der Dorn (2) eine ebene Querschnittsfläche aufweist und unter Rotation und Druck das bzw. die oberen Bauteile (8) durchdringt und dass nach Durchdringen des bzw. der oberen Bauteile (8) die Querschnittsfläche des Dorns (2) eine Reibschweißverbindung mit dem unteren Bauteil (9) eingeht, wobei das Verbindungselement (1) mit einem Zentrierteil (4) versehen ist, so dass das unter Rotation und Druck stehende Verbindungselement (1) zentriert geführt wird, wobei der Dorn (2) hinsichtlich seiner Länge an die Stärke des bzw. der oberen Bauteile (8) angepasst ist, dass nach hergestellter Reibschweißverbindung mit dem unteren Bauteil der Bund (3) am obersten Bauteil (8) anliegt, **dadurch gekennzeichnet, dass** das Zentrierteil als Stift (4, 13, 16) aus der in die Reibschweißverbindung eingehenden, ebenen Querschnittsfläche (6, 12) des Dorns (2) ragt und in Bezug auf die Länge des Dornes (2) so kurz und dünn ausgebildet ist, so dass dieser nach Durchdringen des bzw. der oberen Bauteile (8) praktisch vollständig unter Erweichen seines Materials in die Reibschweißverbindung mit dem unteren Bauteil (9) eingeht.

2. Verfahren nach Anspruch 1, **dadurch gekennzeichnet, dass** der Stift (4) des Verbindungselements (1) zylindrisch ausgebildet ist.

3. Verfahren nach Anspruch 1, **dadurch gekennzeichnet, dass** der Stift (16) des Verbindungselements (1) konisch ausgebildet ist.

4. Verfahren nach Anspruch 1 bis 3, **dadurch gekennzeichnet, dass** der Stift (18) des Verbindungselements (1) eine zentrale Vertiefung (19) aufweist.

## Claims

1. Method for producing a friction welded joint for connecting at least two plate-like components (8, 9), in which a connecting element (1) is used which has a collar (3) and a mandrel (2), which mandrel (2) has a planar cross-sectional area and penetrates the upper component(s) (8) under rotation and pressure, and after penetration of the upper component(s) (8), the cross-sectional area of the mandrel (2) forms a friction-welded joint with the lower component (9), said connecting element (1) being provided with a centering member (4) to ensure that the connecting element (1), which is rotated and under pressure, is guided in a centered manner, with the length of said mandrel (2) being adapted to the thickness of the upper component(s) (8), that once a friction-welded joint has been produced with the lower component, the collar (3) will rest against the uppermost component (8), **characterized in that** the centering member protrudes in the form of a pin (4, 13, 16) from the flat cross-sectional area (6, 12) of the mandrel (2) that forms part of the friction-welded joint, and is designed to be sufficiently short and thin with respect to the length of the mandrel (2) so that, once it has penetrated the upper component(s) (8), its material softens and it almost completely becomes part of the friction-welded joint with the lower component (9).

2. Method according to claim 1, **characterized in that** the pin (4) of the connecting element (1) is of a cylindrical shape.

3. Method according to claim 1, **characterized in that** the pin (16) of the connecting element (1) is of a conical shape.

4. Method according to claims 1 to 3, **characterized in that** the pin (18) of the connecting element (1) has a central recess (19).

## Revendications

1. Procédé de fabrication d'une liaison par soudage par friction destiné à relier au moins deux composants (8, 9) en forme de plaque, où un élément de liaison (1) est utilisé qui présente une collerette (3) et un ergot (2), dans lequel l'ergot (2) présente une surface transversale plane et, en rotation et sous pression, pénètre le ou les composants supérieurs (8), et après pénétration du ou des composants supérieurs (8), la surface transversale de l'ergot (2) établit une liaison par soudage par friction avec le composant inférieur (9), dans lequel l'élément de liaison (1) est doté d'une partie de centrage (4), de sorte que l'élément de liaison (1) en rotation et sous pression soit guidé de façon centrée, dans lequel l'ergot (2) est adapté à l'épaisseur du ou des composants supérieurs (8) pour ce qui est de sa longueur, et qu'après la fabrication de la liaison par soudage par friction avec le composant inférieur, la collerette (3) repose contre le composant supérieur (8), **caractérisé en ce que** la partie de centrage fait saillie en tant que broche (4, 13, 16) depuis la surface transversale (6, 12) plane de l'ergot (2) établissant la liaison par soudage par friction et par rapport à la longueur de l'ergot (2) est conçue de façon suffisamment courte et fine pour que celui-ci, après pénétration du ou des composants supérieurs (8), établisse la liaison par soudage par friction avec le composant inférieur (9) pratiquement totalement par ramollissement de son matériau.

2. Procédé selon la revendication 1, **caractérisé en ce que** la broche (4) de l'élément de liaison (1) est conçue de façon cylindrique.

3. Procédé selon la revendication 1, **caractérisé en ce que** la broche (16) de l'élément de liaison (1) est conçue de façon conique.

4. Procédé selon la revendication 1 à 3, **caractérisé en ce que** la broche (18) de l'élément de liaison (1) présente un renfoncement (19) central.
